# FASCICULE DE BREVET EUROPEEN

(11) **EP 0 910 021 B1**
(45) Date de publication et mention de la délivrance du brevet: **02.07.2003**
(21) Numéro de dépôt: 98402566.8
(22) Date de dépôt: 15.10.1998
(51) Int. Cl.: G06F 13/16, G06F 13/40, G06F 15/167

(54) **Dispositif de communication entre plusieurs processeurs**
Übertragungsvorrichtung zwischen mehreren Prozessoren
Communication apparatus between several processors

(30) Priorité: 16.10.1997 FR 9712960
(43) Date de publication de la demande: 21.04.1999
(73) Titulaire: ALCATEL, 75008 Paris (FR)
(72) Inventeur: Cornillon, Pierre, 78640 Villiers St. Frederic (FR)
(74) Mandataire: Sciaux, Edmond

(56) Documents cités:
- EP-A- 0 280 251
- EP-A- 0 395 416
- EP-A- 0 747 830
- WO-A-97/02533
- US-A- 4 719 621

## Description

L'invention concerne un dispositif de communication entre plusieurs processeurs pouvant être situés sur des cartes différentes. Les cartes sont reliées entre elles par un lien externe. Un processeur donné peut émettre des paquets à destination d'un autre processeur situé sur la même carte ou bien sur une autre carte. Dans ce dernier cas, les paquets transitent par le lien externe.

Chaque carte comporte au moins un processeur et une mémoire, cette mémoire étant utilisée comme boîte à lettres pour communiquer avec ce processeur. Une même carte peut comporter éventuellement plusieurs processeurs reliés à un même bus local, et partageant une même mémoire. Cette dernière est reliée au bus local par un contrôleur de mémoire qui est chargé d'interpréter chaque séquence de commande qui est émise sur le bus local par un processeur, notamment une séquence appelée demande d'accès en écriture, constituée de mots de commande pour écrire des données dans un emplacement de mémoire, désigné par une adresse contenue dans l'un des mots de la séquence ; et une séquence appelée demande d'accès en lecture, constituée de mots de commande pour lire des données dans un emplacement de mémoire, désigné par une adresse contenue dans l'un des mots de la séquence.

On connaît un premier dispositif de communication permettant la transmission d'informations uniquement entre des processeurs situés sur une même carte, ou tout au moins situés à une faible distance, sur des cartes distinctes reliées par un fond de panier. Ces processeurs sont tous reliés à un même bus auquel est relié une mémoire utilisée comme mémoire partagée pour l'échange de paquets de données, c'est à dire jouant le rôle d'une boîte à lettres. Cette mémoire partagée est susceptible d'être accédée quasi simultanément par plusieurs processeurs écrivains ou lecteurs. Pour assurer le maintien de la cohérence des données dans cette mémoire, il est alors nécessaire de réaliser des cycles atomiques de lecture et d'écriture. Ce dispositif ne convient pas pour faire communiquer des processeurs qui sont relativement éloignés, car une augmentation de la longueur du bus le rendrait sensible aux interférences électromagnétiques qui sont susceptibles de causer des erreurs de transmission.

On connaît un second dispositif de communication qui est capable de faire communiquer plusieurs processeurs situés à des distances importantes. Ce dispositif comporte, sur chaque carte, un circuit de transmission qui constitue une interface physique entre un bus local propre à cette carte et un lien externe reliant toutes les cartes. Chaque processeur exécute des protocoles de niveaux 2, 3, et 4, par exemple les protocoles ETHERNET/TCP/IP, alors que les circuits de liaison n'assurent que l'interface physique entre le bus local de chaque carte et le lien externe qui est commun. Ces protocoles gèrent : des acquittements, des temporisations, des retransmissions. Par conséquent, le temps d'accès au lien externe, pour transmettre chaque paquet, est relativement long : de l'ordre d'une milliseconde. Ce dispositif n'est donc utilisé que dans les cas où les processeurs sont relativement éloignés, sur plusieurs cartes distinctes.

L'Homme de l'Art est donc conduit à utiliser des logiciels de communication différents, d'une part pour les processeurs qui communiquent à courte distance, typiquement sur une même carte ou à quelques décimètres, et d'autre part pour les processeurs qui communiquent à une distance relativement grande, typiquement sur différentes cartes d'un même équipement électronique.

Le but de l'invention est de composer un dispositif de communication qui procure un temps d'accès plus réduit que ce second dispositif, au moins pour les accès en écriture, et qui soit utilisable à la fois pour la communication entre des processeurs situés sur une même carte, et pour la communication entre des processeurs relativement éloignés, sans avoir à faire exécuter un logiciel différent, dans les processeurs.

L'objet de l'invention est un dispositif de communication entre plusieurs processeurs pouvant être situés sur des cartes différentes, chaque processeur étant relié par un bus local à une mémoire située sur la même carte que ce processeur ; chaque processeur comportant des moyens logiciels pour émettre sur son bus local une séquence appelée demande d'accès en écriture, constituée de mots de commande pour écrire des données dans un emplacement de mémoire, désigné par une adresse contenue dans l'un des mots de la séquence ; et des moyens de transmission de données pour relier entre eux tous les bus locaux ; ces moyens de transmission comportant, sur chaque carte, un dispositif de routage relié au bus local de cette carte et relié à un bus dit externe reliant toutes les cartes ; et chaque dispositif de routage comportant :
- des premiers moyens pour analyser chaque demande d'accès en écriture, émise sur le bus local auquel est relié ce dispositif de routage, et, si une demande d'accès est adressée à une mémoire qui n'est pas située sur la même carte que celle supportant ce dispositif de routage, émettre sur le bus externe une suite de paquets, construite à partir des données et de l'adresse contenue dans cette demande d'accès, et émettre sur le bus local un accusé de réception destiné au processeur qui a émis cette demande d'accès ;
- et des deuxièmes moyens pour analyser chaque suite de paquets émise sur le bus externe par un autre circuit de routage, et, si une suite de paquets contient une demande d'accès en écriture adressée à une mémoire située sur la carte supportant ce dispositif de routage, émettre sur le bus local une demande d'accès en écriture, construite à partir de données et d'une adresse contenue dans cette suite de paquets ;
**caractérisé** en ce que chaque carte comporte un contrôleur de mémoire pour lire et inscrire des paquets de données dans la mémoire de cette carte ;
et en ce que lorsqu'un contrôleur de mémoire reçoit un paquet à inscrire dans la mémoire qui lui est associée, il inscrit ce paquet dans une plage de cette mémoire, propre au processeur qui est le destinataire du paquet considéré, et plus particulièrement dans une sous-plage propre au processeur qui a émis le paquet.

Le document US-A-4 719621 décrit un dispositif de communication entre plusieurs processeurs comportant les caractéristiques définies dans le préambule de la revendication 1.

Dans le dispositif ainsi caractérisé, chaque dispositif de routage est vu par les processeurs, situés sur la même carte que lui, comme un contrôleur de mémoire, en particulier parce qu'il émet un accusé de réception dés qu'il reçoit une demande d'accès en écriture vers une mémoire distante, ce qui permet au processeur demandeur de continuer son travail après une attente minime, bien plus courte que le délai réellement nécessaire pour réaliser effectivement l'écriture. Le temps d'accès en écriture sur une autre carte est donc très amélioré.

Le dispositif ainsi caractérisé permet à chaque processeur d'écrire dans différentes mémoires situées respectivement sur différentes cartes, comme s'il s'agissait d'une seule et même mémoire, située sur la même carte que ce processeur, et partagée par tous les processeurs, grâce au fait que le dispositif de routage est vu comme un contrôleur de mémoire. Pour accéder à une mémoire proche ou à une mémoire distante, un processeur émet de la même manière une demande d'accès sur le bus local auquel il est rattaché. Chaque processeur se comporte donc de la même façon quelle que soit la distance à laquelle est située un autre processeur auquel il veut envoyer des données. Par conséquent il est possible de faire exécuter un même logiciel par tous les processeurs devant communiquer entre eux. Cela permet en particulier de modifier la localisation d'un ou plusieurs processeurs d'un système, sans modifier le logiciel exécuté par ces processeurs. Par exemple, il est possible de rassembler sur une même carte au moins deux processeurs qui étaient situés sur deux cartes distinctes lors de la réalisation d'une précédente version du système considéré.

Le dispositif ainsi caractérisé assure le maintien de la cohérence de données, par des moyens simples, grâce au fait que chaque sous-plage de mémoire constitue une boîte à lettres réservée à un seul processeur écrivain et à un seul processeur lecteur, ce qui supprime tout problème d'entrelacement éventuel des opérations de lecture et d'écriture par différents processeurs.

Selon une autre caractéristique, le dispositif de communication selon l'invention est caractérisé en ce que chaque dispositif de routage comporte en outre :
- des troisièmes moyens pour analyser chaque demandes d'accès en lecture, émise sur le bus local auquel est relié ce dispositif de routage, et, si une demande d'accès en lecture est adressée à une mémoire qui n'est pas située sur la même carte que cèlle supportant ce dispositif de routage, émettre sur le bus externe une suite de paquets construite à partir de cette demande d'accès en lecture ;
- des quatrièmes moyens pour analyser chaque suite de paquets émise sur le bus externe par un autre circuit de routage et, si une suite de paquets contient une demande d'accès en lecture, adressée à une mémoire située sur la carte supportant ce dispositif de routage, émettre sur le bus local une demande d'accès en lecture, construite à partir de la demande d'accès en lecture contenue dans cette suite de paquets ;
- des cinquièmes moyens pour analyser chaque séquence émise sur le bus local et contenant des données lues à la demande d'un processeur situé sur une autre carte, et émettre sur le bus externe une suite de paquets construite à partir de ces données lues ;
- des sixièmes moyens pour analyser chaque suite de paquets émise sur le bus externe par, et, si une suite de paquets contient des données lues adressées à un processeur située sur la carte supportant ce dispositif de routage, émettre sur le bus local une séquence construite à partir de cette suite de paquets.

Le dispositif ainsi caractérisé permet en outre à chaque processeur de lire dans différentes mémoires situées respectivement sur différentes cartes, comme s'il s'agissait d'une seule et même mémoire, située sur la même carte que ce processeur, et partagée par tous les processeurs, grâce au fait que le dispositif de routage est vu comme un contrôleur de mémoire aussi pour les accès en lecture. Dans tous les cas, un processeur émet de la même manière une demande d'accès sur le bus local auquel il est rattaché. Chaque processeur se comporte donc de la même façon quelle que soit la distance à laquelle est située un autre processeur auquel il veut envoyer des données. Par conséquent, il est possible de faire exécuter un même logiciel par tous les processeurs, pour les accès en lecture.

Selon une autre caractéristique, le dispositif selon l'invention est caractérisé en ce que les premiers moyens comportent :
- des moyens pour :
   -- analyser des séquences qui sont émises sur le bus local, identifier les demandes d'accès en écriture destinées à un processeur situé sur une autre carte, construire des paquets, de longueur fixée, à partir de ces séquences, et émettre sur le bus local un accusé de réception destiné au processeur qui a émis cette demande d'accès ;
   -- munir chaque paquet d'une en-tête comportant : un indicateur de d'accès en écriture, l'adresse du début d'une plage de mémoire propre au processeur destinataire, et l'identité d'une sous-plage propre processeur expéditeur ; des paquets consécutifs étant munis d'adresses consécutives ;
- des moyens pour stocker une suite de paquets ;
- et des moyens pour émettre ces paquets sur le bus externe sous la forme d'une suite de blocs comportant chacun un nombre entier de paquets.

Le dispositif ainsi caractérisé permet d'utiliser très efficacement le bus externe parce que le fait de transmettre un messages par blocs de paquets destinés à des adresses consécutives, permet, d'une part, d'optimiser la bande passante du bus externe, et d'autre part, de prévoir l'adresse où devra être inscrite le paquet qui suivra le paquet en cours de transmission, ceci permettant de gagner du temps dans les opérations de transmission et d'écriture des paquets, et par conséquent de gagner du temps dans la transmission d'un message.

L'invention sera mieux comprise et d'autres caractéristiques apparaîtront à l'aide de la description ci-dessous et des figures l'accompagnant :
- La figure 1 représente le schéma synoptique d'un exemple de réalisation du dispositif de communication selon l'invention ;
- la figure 2 représente schématiquement une mémoire qui fait partie de cet exemple de réalisation ;
- la figure 3 représente le schéma synoptique d'un circuit de routage qui fait partie de cet exemple de réalisation ;
- et la figure 4 illustre le procédé de découpage d'un paquet en une pluralité de paquets.

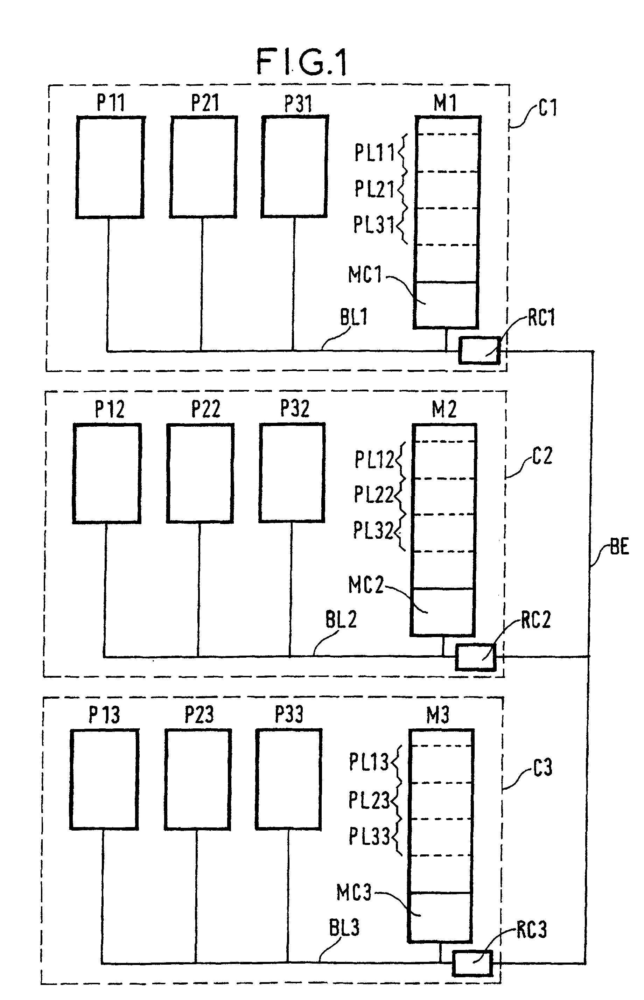

L'exemple de réalisation représenté sur la **figure 1** comprend trois cartes C1, C2, C3 reliées par un bus externe BE' qui peut être de type série ou parallèle. La carte C1 comporte :
- un bus local BL1 ;
- trois processeurs P11, P21, P31, reliés chacun au bus local BL1 ;
- un contrôleur de mémoire, MC1, relié au bus local BL1 ;
- une mémoire vive à accès aléatoire, M1, reliée au contrôleur MC1 ;
- et un circuit de routage RC1 ayant un accès relié au bus local BL1 et un accès relié au bus externe BE.

Dans cet exemple, les cartes C2 et C3 ont une architecture analogue à celle de la carte C1. Il est à noter que la portée de l'invention n'est pas limitée à ce nombre de cartes, et à ce nombre de processeurs par carte.

Toutes les mémoires M11, M21, M31, M12, M22, M32, M13, M23, M33, du dispositif ont un ensemble d'adresses commun pour constituer une mémoire partagée et distribuée. Tous les processeurs P11, P21, P31, P12, P22, P32, P13, P23, P33 échangent des messages en inscrivant des données dans des mémoires jouant le rôle de boîtes à lettres. Sur chacune des cartes C1, C2, C3, la mémoire, respectivement M1, M2, M3, comporte trois plages d'adressage distinctes et réservées à la réception de données destinées respectivement à trois processeurs. Par exemple, la mémoire M1 de la carte C1 comporte trois plages d'adressage distinctes PL11, PL21, PL31, réservées à la réception de données destinées respectivement aux processeurs P11, P21, P31. Par exemple, les données émises par un processeur quelconque, situé sur une carte quelconque, et destinées au processeur P21, sont inscrites dans la plage PL21 où elles seront lues par le processeur P21.

Un processeur, P11 par exemple, peut émettre une séquence de commandes sur le bus local BL1, constituant une demande d'accès à un emplacement de mémoire, pour y lire ou y écrire des données. Cette séquence contient les informations suivantes :
- le type d'accès (lecture ou écriture) ;
- l'adresse de l'emplacement de mémoire, cette adresse comportant un champ désignant la carte supportant la mémoire, un champ désignant une plage de mémoire correspondant au processeur destinataire, un champ désignant une sous-plage de mémoire correspondant au processeur expéditeur, et un champ déplacement dans cette sous-plage ;
- le type de données à lire ou à écrire (1, ou 2, ou 4, ou 8 octets) ;
- les données à écrire, s'il s'agit d'une écriture.

Considérons le contrôleur de mémoire MC1 par exemple. S'il reçoit une séquence de commandes sur le bus local BL1, il analyse cette séquence pour déterminer si l'emplacement désigné par l'adresse est situé dans la mémoire qu'il contrôle. Si c'est le cas, et si c'est un accès en écriture, il réalise l'écriture demandée puis émet sur le bus local BL1 un mot d'accusé de réception destiné à signaler au processeur qui a demandé cette écriture, que celle-ci a bien été exécutée. Dans le cas d'une lecture, il émet sur le bus local BL1 une séquence de mots binaires contenant les données lues.

Considérons le circuit de routage RC1 par exemple. Il surveille en permanence le bus local BL1 auquel il est relié, et le bus externe commun BE. S'il reçoit une séquence de commandes sur le bus local BL1, il analyse cette séquence pour déterminer si l'emplacement désigné par l'adresse est situé dans la mémoire M1 qui est sur la même carte C1 que lui. Si c'est le cas, il ne réagit pas, il laisse le contrôleur de mémoire MC1 faire la lecture ou l'écriture demandée.
- Si c'est une demande d'accès en écriture, et si l'adresse de l'emplacement indique qu'il n'est pas situé dans la mémoire M1, le circuit de routage RC1 émet sur le bus externe BE une suite de paquets de données construite à partir de l'instruction ou des instructions d'écriture, des données, et de l'adresse contenues dans la demande d'accès. Il émet en outre, immédiatement, sur le bus local BL1, un mot indiquant que l'accès en écriture a bien été exécuté, pour signaler au processeur qui a demandé cette écriture, que celle-ci a bien été exécutée.
- Si c'est une demande d'accès en lecture, et si l'adresse de l'emplacement indique qu'il n'est pas situé dans la mémoire M1, le circuit de routage RC1 émet sur le bus externe BE un paquet construit à partir de l'instruction de lecture, et de l'adresse, contenues dans la demande d'accès.

Le circuit de routage RC1 surveille en permanence le bus externe BE, et analyse chaque suite de paquets émise sur ce bus
- Si cette suite de paquets contient une demande d'accès, émise par la carte C2 ou la carte C3, il analyse cette suite pour déterminer si l'emplacement désigné par l'adresse est situé dans la mémoire M1 :
   -- Si c'est une demande d'accès en écriture, il émet sur le bus local BL1 une demande d'accès en écriture construite à partir du type d'accès (écriture), du type de données, des données à écrire, et de l'adresse contenue dans la suite de paquets.
   -- Si c'est une demande d'accès en lecture, il émet sur le bus local BL1 une demande d'accès en lecture construite à partir du type d'accès (lecture), du type de données, et de l'adresse contenue dans la suite de paquets. Puis il émet sur le bus externe BE une réponse contenant les données lues.
- Si cette suite constitue une réponse, émise par la carte C2 ou C3, à la suite d'une demande de lecture, émise par la carte C1, le circuit de routage RC1 analyse cette suite pour déterminer si l'emplacement désigné par l'adresse est situé dans la mémoire M1. Si c'est le cas, il émet sur le bus local BL1 une demande d'accès en écriture construite à partir du type d'accès, du type de données, des données lues, et de l'adresse contenues dans la suite de paquets. Le contrôleur MC1 inscrit dans la mémoire M1 les données lues, et il débloque le processeur, P11 par exemple, qui avait demandé la lecture et qui attendait donc l'arrivée des données lues.

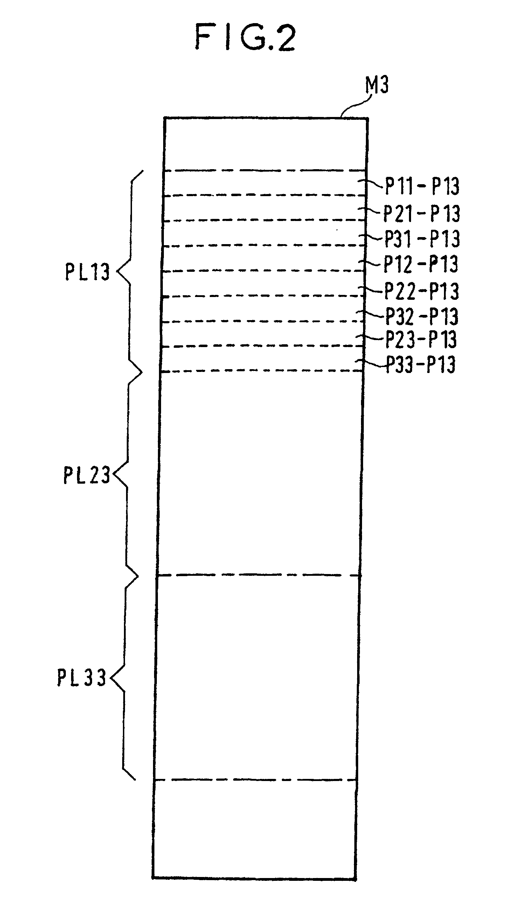

La **figure 2** représente, à titre d'exemple, la mémoire M3 de la carte C3. Elle montre la structure des plages et des sous-plages utilisées pour mémoriser les paquets destinés aux processeurs P13, P23, P33 de la carte C3. La mémoire M3 comporte trois plages d'adressage PL13, PL23, PL33 réservées à la réception des paquets destinés respectivement aux trois processeurs P13, P23, P33. Comme, dans cet exemple, chaque processeur P13, P23, P33 peut recevoir des paquets en provenance de huit autres processeurs, chaque plage d'adressage est décomposée en seize sous-plages de capacités identiques. A titre d'exemple, la plage PL13 comporte :
- une sous-plage P11-P13 pour mémoriser les paquets émis par le processeur P11 à destination du processeur P13 ;
- une sous-plage P21-P13 pour mémoriser les paquets émis par le processeur P21 à destination du processeur P 13 ;
- une sous-plage P31-P13 pour mémoriser les paquets émis par le processeur P31 à destination du processeur P13 ;
- une sous-plage P12-P13 pour mémoriser les paquets émis par le processeur P12 à destination du processeur P13 ;
- une sous-plage P32-P13 pour mémoriser les paquets émis par le processeur P32 à destination du processeur P13 ;
- une sous-plage P23-P13 pour mémoriser les paquets émis par le processeur P23 à destination du processeur P13 ;
- et une sous-plage P33-P13 pour mémoriser les paquets émis par le processeur P33 à destination du processeur P13.

Par exemple, si le processeur P11 de la carte C1 émet un paquet destiné au processeur P13 de la carte C3, le contrôleur de mémoire MC3 de la carte C3 inscrit ce paquet dans la sous-plage P11-P13.

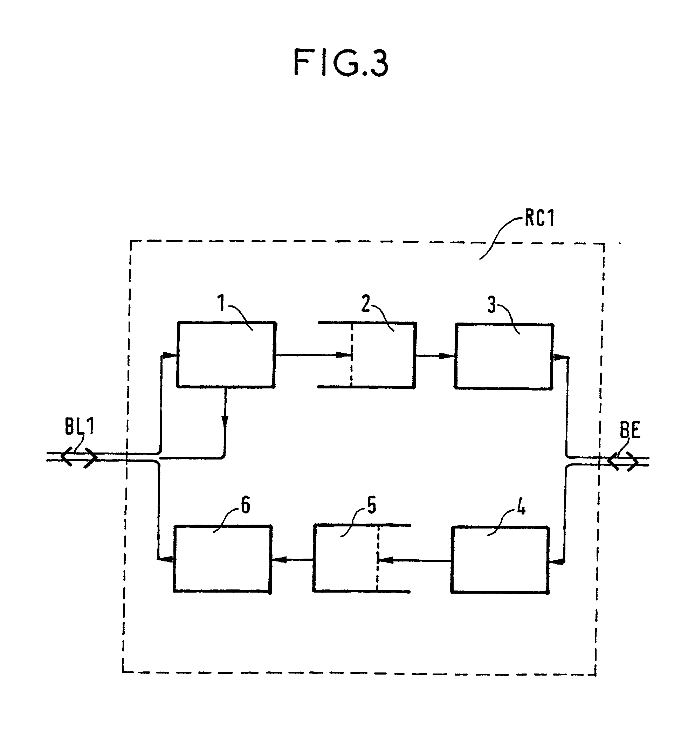

La **figure 3** représente le schéma synoptique d'un exemple de réalisation du circuit de routage RC1 pris à titre d'exemple. Cet exemple de réalisation comporte :
- un circuit 1, ayant une entrée reliée au bus local BL1, pour analyser des séquences qui sont émises sur le bus local BL1, identifier les demandes d'accès, en lecture ou écriture, destinées à un processeur situé sur une autre carte ; construire des paquets à partir de ces séquences ; et ayant une sortie reliée au bus local BL1, pour émettre sur le bus local BL1 un accusé de réception destiné au processeur qui a émis cette demande d'accès ;
- une mémoire 2 de type premier-entré-premier-sorti, ayant une entrée de données reliée à une sortie du circuit 1, pour le stockage des paquets à émettre sur le bus externe BE ;
- un circuit 3 d'écriture sur le bus externe BE, ayant une entrée reliée à une sortie de la mémoire 2 et une sortie reliée au bus externe BE, pour émettre les paquets stockés dans la mémoire 2 ;
- un circuit 4, ayant une entrée reliée au bus externe BE, pour analyser des suites de paquets qui sont émises sur le bus externe BE, et identifier les paquets destinés à un processeur de la carte C1 ;
- une mémoire 5 de type premier-entré-premier-sorti, ayant une entrée reliée à une sortie du circuit 4, pour le stockage des paquets provenant du bus externe BE et destinés à un processeur de la carte C1 ;
- un circuit 6, ayant une entrée reliée à une sortie de la mémoire 5, pour construire des demandes d'accès en lecture ou écriture (séquence de mots sur le bus local BL1) à partir des paquets stockés dans la mémoire 5, et les émettre sur le bus local BL1.

Le circuit 3 surveille le nombre de paquets contenus dans cette mémoire 2. Il vide la mémoire 2 lorsqu'elle contient seize paquets, ou bien, lorsqu'elle contient moins de seize paquets, après l'expiration d'un délais maximal d'attente défini par un temporisateur non représenté. Le circuit 3 demande alors l'attribution du bus externe BE, et vide la mémoire 2 lorsque le bus BE est attribué au circuit RC1 (par un procédé classique d'allocation de bus, mis en oeuvre par des moyens classiques, non représentés, distribués dans les circuits de routage RC1, RC2, RC3).

Le circuit 6 procède de manière analogue sur le bus local BL1, lorsque le bus local BL1 est attribué à ce circuit 6 (par un procédé classique de gestion des accès, mis en oeuvre par des moyens classiques, non représentés, distribués dans les circuits de routage RC1, RC2, RC3). Tout message est transmis sur un bus local sous la forme d'un accès mémoire classique, en lecture ou en écriture, géré par le contrôleur de mémoire MC1.

Tout message est transmis sur le bus externe BE sous la forme de paquets comportant chacun huit octets : Une en-tête H constituée de quatre octets utilisés pour l'adressage, et quatre octets de données utiles D. L'en-tête H comporte :
- un indicateur de type d'accès (lecture/écriture) ;
- un premier champ constituant l'adresse du début d'une plage qui est située dans la mémoire de la carte où est situé le processeur destinataire ;
- un deuxième champ désignant une sous-plage correspondant au processeur destinataire, et qui est une fraction prédéterminée de la plage désignée par le premier champ ;
- et un troisième champ constituant un déplacement à l'intérieur de la sous-plage, pour désigner un emplacement pour un paquet.

Chaque paquet peut être muni en outre de bits de contrôle de parité pour détecter de manière classique les erreurs de transmission. Le circuit de routage du côté émission et le circuit de routage du côté réception gèrent : l'acquittement des paquets, un temporisation, et une retransmission éventuelle dans le cas d'une erreur de transmission. Par conséquent, le logiciel exécuté par les processeurs n'a pas à gérer ces opérations.

Lorsqu'un circuit de routage, RC3 par exemple, reçoit un paquet transmis par le bus externe BE, il scrute l'en-tête d'adressage H pour déterminer si le paquet est destiné à une plage d'adresses appartenant à la mémoire M3 de la carte C3 sur laquelle est situé ce circuit de routage RC3. Il scrute l'en-tête de routage pour déterminer en outre : le type d'accès, l'adresse du début d'une plage, l'identité d'une sous-plage, et le déplacement désignant l'emplacement destinataire du paquet. Puis il commande l'inscription ou la lecture des données utiles dans cet emplacement.

Dans cet exemple de réalisation, chaque paquet est constitué de huit octets. Pour augmenter l'efficacité de l'utilisation du bus externe BE, c'est-à-dire augmenter le débit moyen sur ce bus, les paquets de huit octets sont transmis sous la forme de blocs comportant chacun plusieurs paquets, au maximum seize paquets consécutifs dans cet exemple.

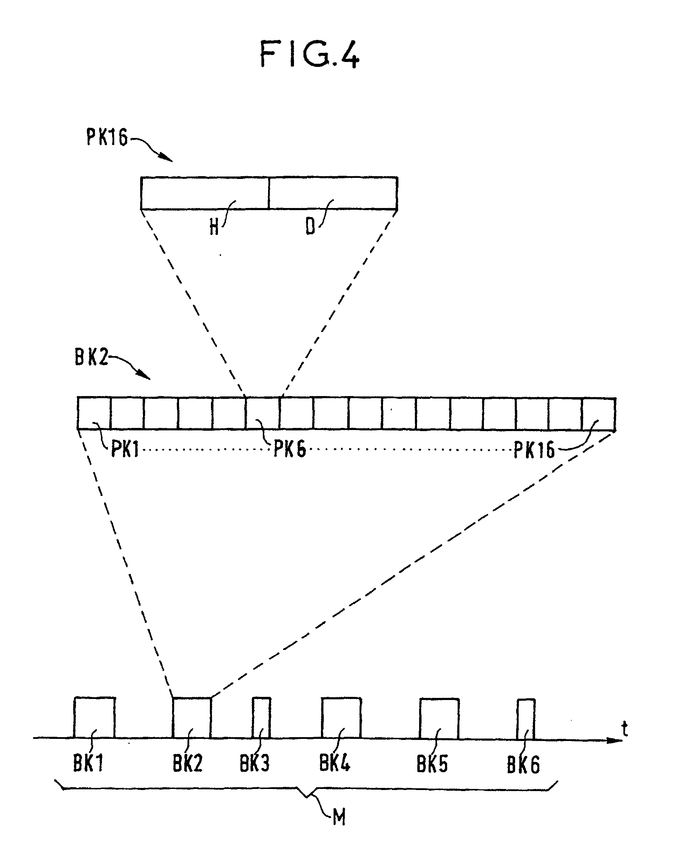

La **figure 4** illustre le procédé de transmission d'un message M, relativement long, d'un processeur à un autre. La dernière ligne représente le déroulement de la transmission de l'ensemble d'un message M, en fonction du temps t. Dans cet exemple, le message M est transmis sous la forme d'une suite de six blocs BK1, ....., BK6, séparés par des intervalles de temps de durées diverses. Dans cet exemple, les blocs comportent au maximum seize paquets. La transmission est arrêtée, après l'émission de seize paquets du bloc BK1 et après l'émission de seize paquets du bloc BK2, pour prendre le temps de préparer un nouveau bloc de seize paquets, et pour permettre éventuellement à d'autres circuits de routage de prendre le bus externe BE pour transmettre eux-mêmes des blocs de paquets. Le bloc BK3 ne comporte que cinq paquets parce qu'un événement indépendant de la transmission de paquet a provoqué une interruption de la transmission, au niveau du circuit de routage, ou au niveau du processeur fournissant le paquet à transmettre. Les deux blocs suivants, BK4 et BK5, comportent le nombre maximal (seize) de paquets. Le dernier bloc BK6 ne comporte que trois paquets, car le message M comporte un nombre total de paquets tel que la transmission de trois paquets suffit pour terminer la transmission du paquet M.

Cette figure 4 montre en outre le contenu du bloc BK2 à titre d'exemple. Il est constitué de seize paquets PK1,..., PK16. Elle montre en outre à titre d'exemple la constitution du paquet PK6 : quatre octets d'en-tête, référencés H constituent l'adresse (correspondant à un emplacement de mémoire), et quatre octets référencés D constituent les données utiles.

Il est possible de diffuser un message simultanément vers tous les processeurs, en réservant une adresse pour cet usage. Quand une suite de paquets contient cette adresse, elle est mémorisée, puis convertie en demande d'accès, par tous les circuits de routage.

## Revendications

1. Dispositif de communication entre plusieurs processeurs (P11, P21, P31, P12, P22, P32, P13, P23, P33) pouvant être situés sur des cartes différentes (C1, C2, C3), chaque processeur étant relié par un bus local (BL1, BL2, BL3) à une mémoire (M1, M2, M3 respectivement) située sur la même carte que ce processeur ; chaque processeur comportant des moyens logiciels pour émettre sur son bus local une séquence appelée demande d'accès en écriture, constituée de mots de commande pour écrire des données dans un emplacement de mémoire, désigné par une adresse contenue dans l'un des mots de la séquence ; et des moyens de transmission de données (RC1, RC2, RC3, BE) pour relier entre eux tous les bus locaux, ces moyens de transmission comportant, sur chaque carte (C1, C2, C3), un dispositif de routage (RC1, RC2, RC3) relié au bus local (BL1, BL2, BL3) de cette carte et relié à un bus dit externe (BE) reliant toutes les cartes ; et chaque dispositif de routage (RC1) comportant :
- des premiers moyens (1, 2, 3) pour analyser chaque demande d'accès en écriture, émise sur le bus local (BL1) auquel est relié ce dispositif de routage, et, si une demande d'accès est adressée à une mémoire (M2, M3) qui n'est pas située sur la même carte (C1) que celle supportant ce dispositif de routage, émettre sur le bus externe (BE) une suite (M) de paquets (PK1, ..., PK16) construite à partir des données et de l'adresse contenue dans cette demande d'accès, et émettre sur le bus local (BL1) un accusé de réception destiné au processeur qui a émis cette demande d'accès ;
- des deuxièmes moyens (4, 5, 6) pour analyser chaque suite de paquets émise sur le bus externe (BE) par un autre circuit de routage (RC2, RC3), et, si une suite de paquets contient une demande d'accès en écriture adressée à une mémoire située sur la carte (C1) supportant ce dispositif de routage (RC1), émettre sur le bus local (BL1) une demande d'accès en écriture, construite à partir de données et d'une adresse contenue dans cette suite de paquets ;
**caractérisé en ce que** chaque carte comporte un contrôleur de mémoire (MC1, MC2, MC3 respectivement) pour lire et inscrire des paquets de données dans la mémoire (M1, M2, M3 respectivement) de cette carte ;
et **en ce que** lorsqu'un contrôleur de mémoire (MC3) reçoit un paquet à inscrire dans la mémoire qui lui est associée, il inscrit ce paquet dans une plage (..., PL13,...), de cette mémoire, propre au processeur (..., P13,...) qui est le destinataire du paquet considéré, et plus particulièrement dans une sous-plage (..., P11-P13,...) propre au processeur (..., P11,...) qui a émis le paquet.

2. Dispositif selon la revendication 1, **caractérisé en ce que** chaque dispositif de routage (RC1) comporte en outre :
- des troisièmes moyens (1, 2, 3) pour analyser chaque demande d'accès en lecture, émise sur le bus local (BL1) auquel est relié ce dispositif de routage, et, si une demande d'accès en lecture est adressée à une mémoire (M2, M3) qui n'est pas située sur la même carte (C1) que celle supportant ce dispositif de routage, émettre sur le bus externe (BE) une suite (M) de paquets (PK1, ..., PK16) construite à partir de cette demande d'accès en lecture ;
- des quatrièmes moyens (4, 5, 6) pour analyser chaque suite de paquets émise sur le bus externe (BE) par un autre circuit de routage (RC2, RC3) et, si une suite de paquets contient une demande d'accès en lecture, adressée à une mémoire située sur la carte (C1) supportant ce dispositif de routage, émettre sur le bus local (BL1) une demande d'accès en lecture, construite à partir de la demande d'accès en lecture contenue dans cette suite de paquets ;
- des cinquièmes moyens (1, 2, 3) pour analyser chaque séquence émise sur le bus local (BL1) et contenant des données lues à la demande d'un processeur situé sur une autre carte (C1, C2, C3), et émettre sur le bus externe (BE) une suite (M) de paquets (PK1, ..., PK16) construite à partir de ces données lues ;
- des sixièmes moyens (4, 5, 6) pour analyser chaque suite de paquets émise sur le bus externe (BE) par, et, si une suite de paquets contient des données lues adressées à un processeur située sur la carte (C1) supportant ce dispositif de routage, émettre sur le bus local (BL1) une séquence construite à partir de cette suite de paquets.

3. Dispositif selon la revendication 1, **caractérisé en ce que** les premiers moyens (1, 2, 3) comportent :
- des moyens (1) pour :
-- analyser des séquences qui sont émises sur le bus local (BL1), identifier les demandes d'accès en écriture destinées à un processeur situé sur une autre carte, pour construire des paquets (PK1, ..., PK16), de longueur fixée, à partir de ces séquences ; et émettre sur le bus local (BL1) un accusé de réception destiné au processeur qui a émis cette demande d'accès ;
-- munir chaque paquet d'une en-tête (H) comportant un indicateur d'accès en écriture, l'adresse du début d'une plage de mémoire (PL13) propre au processeur destinataire (P13), l'identité d'une sous-plage (P11-P13) propre processeur expéditeur (P11) ; et un déplacement à l'intérieur de la sous-plage, désignant un emplacement de mémoire ; des paquets destinés à des emplacements de mémoire consécutifs étant émis de manière consécutives ;
- des moyens (2) pour stocker une suite de paquets (PK1, ..., PK16) ;
- et des moyens (3) pour émettre ces paquets sur le bus externe (BE) sous la forme d'une suite de blocs (BK1, BK2, ... ) comportant chacun un nombre entier de paquets.

## Patentansprüche

1. Vorrichtung für die Kommunikation zwischen mehreren Prozessoren (P11, P21, P31, P12, P22, P32, P13, P23, P33), die sich auf verschiedenen Karten (C1, C2, C3) befinden können, wobei jeder Prozessor über einen lokalen Bus (BL1, BL2, BL3) mit einem Speicher (M1, M2 bzw. M3) verbunden ist, der sich auf derselben Karte wie dieser Prozessor befindet; wobei jeder Prozessor Softwaremittel enthält, um auf seinem lokalen Bus eine Schreibzugriffsanforderung genannte Sequenz zu senden, die aus Befehlswörtern gebildet ist, um Daten in einen Speicherplatz zu schreiben, der durch eine in einem der Wörter der Sequenz enthaltene Adresse bezeichnet ist; und Datenübertragungsmittel (RC1, RC2, RC3, BE) enthält, um sämtliche lokalen Busse miteinander zu verbinden, wobei diese Übertragungsmittel auf jeder Karte (C1, C2, C3) eine Lenkungsvorrichtung umfassen, die mit dem lokalen Bus (BL1, BL2, BL3) dieser Karte und mit einem so genannten externen Bus (BE), der sämtliche Karten verbindet, verbunden ist; und wobei jede Lenkungsvorrichtung (RC1) umfasst:
- erste Mittel (1, 2, 3), die jede Schreibzugriffsanforderung, die von dem lokalen Bus (BL1) ausgesendet wird, mit dem diese Lenkungsvorrichtung verbunden ist, analysieren und, falls eine Zugriffsanforderung an einen Speicher (M2, M3) gerichtet ist, der sich nicht auf derselben Karte (C1) wie jene befindet, die diese Lenkungsvorrichtung trägt, eine Folge (M) von Paketen (PK1, ..., PK16), die aus Daten und aus der in dieser Zugriffsanforderung enthaltenen Adresse gebildet ist, auf den externen Bus (BE) aussenden und eine Empfangsbestätigung, die für den Prozessor bestimmt ist, der diese Zugriffsanforderung gesendet hat, auf den lokalen Bus (BL1) aussenden;
- zweite Mittel (4, 5, 6), die jede Folge von Paketen, die durch eine andere Lenkungsschaltung (RC2, RC3) auf den externen Bus (BE) geschickt worden ist, analysieren und, falls eine Folge von Paketen eine Schreibzugriffsanforderung enthält, die an einen Speicher gerichtet ist, der sich auf der Karte (C1) befindet, die diese Lenkungsvonichtung (RC1) trägt, eine Schreibzugriffsanforderung, die aus Daten und aus einer in dieser Folge von Paketen enthaltenen Adresse konstruiert ist, auf den lokalen Bus (BL1) aussenden;
**dadurch gekennzeichnet, dass** jede Karte einen Speicher-Controller (MC1 bzw. MC2 bzw. MC3) enthält, um die Datenpakete aus dem Speicher (M1 bzw. M2 bzw. M3) dieser Karte zu lesen bzw. in ihn zu schreiben;
und dass dann, wenn ein Speicher-Controller (MC3) ein Paket empfängt, das in den ihm zugeordneten Speicher geschrieben werden soll, er dieses Paket in einen Bereich (..., PL13, ...) dieses Speichers schreibt, der zu jenem Prozessor (..., P13, ...) gehört, der der Adressat des betrachteten Pakets ist, und genauer in einen Unterbereich (..., P11-P13, ...) schreibt, der zu dem Prozessor (..., P11, ...) gehört, der das Paket gesendet hat.

2. Vorrichtung nach Anspruch 1, **dadurch gekennzeichnet, dass** jede Lenkungsvorrichtung (RC1) außerdem umfasst:
- dritte Mittel (1, 2, 3), die jede Lesezugriffsanforderung, die auf den lokalen Bus (BL1) ausgesendet wird, mit dem diese Lenkungsvorrichtung verbunden ist, analysieren und, falls eine Lesezugriffsanforderung an einen Speicher (M2, M3) gerichtet ist, der sich nicht auf derselben Karte (C1) wie jene befindet, die diese Lenkungsvorrichtung trägt, eine Folge (M) von Paketen (PK1, ..., PK16), die aus dieser Lesezugriffsanforderung konstruiert ist, auf den externen Bus (BE) aussenden;
- vierte Mittel (4, 5, 6), die jede Folge von Paketen, die von einer anderen Lenkungsschaltung (RC2, RC3) auf den externen Bus (BE) ausgesendet wird, analysieren und, falls eine Folge von Paketen eine Lesezugriffsanforderung enthält, die an einen Speicher gerichtet ist, der sich auf der Karte (C1) befindet, die diese Lenkungsvorrichtung trägt, eine Lesezugriffsanforderung, die aus der in dieser Folge von Paketen enthaltenen Lesezugriffsanforderung konstruiert ist, auf den lokalen Bus (BL1) aussenden;
- fünfte Mittel (1, 2, 3), die jede Folge, die auf den lokalen Bus (BL1) ausgesendet wird und Daten enthält, die auf Anforderung eines auf einer anderen Karte (C1, C2, C3) befindlichen Prozessors gelesen werden, analysieren und eine Folge (M) von Paketen (PK1, ..., PK16), die aus diesen gelesenen Daten konstruiert ist, auf den externen Bus (BE) aussenden;
- sechste Mittel (4, 5, 6), die jede Folge von Paketen, die auf den externen Bus (BE) ausgesendet werden, analysieren und, falls eine Folge von Paketen gelesene Daten enthält, die an einen Prozessor gerichtet sind, der sich auf der Karte (C1) befindet, die diese Lenkungsvorrichtung trägt, eine Folge, die aus dieser Folge von Paketcn konstruiert ist, auf den lokalen Bus (BL1) aussenden.

3. Vorrichtung nach Anspruch 1, **dadurch gekennzeichnet, dass** die ersten Mittel (1, 2, 3) umfassen:
- Mittel (1), die:
-- Sequenzen analysieren, die auf den lokalen Bus (BL1) gesendet werden, die Schreibzugriffsanforderungen identifizieren, die für einen auf einer anderen Karte befindlichen Prozessor bestimmt sind, um Pakete (PK1, ..., PK16) mit fester Länge anhand dieser Sequenzen zu konstruieren; und auf den lokalen Bus (BL1) eine Empfangsbestätigung aussenden, die für den Prozessor bestimmt ist, der diese Zugriffsanforderung ausgesendet hat;
-- jedes Paket mit einem Kopf (H) versehen, der enthält: einen Schreibzugriffs-Indikator, die Anfangsadresse eines dem Zielprozessor (P13) eigenen Speicherbereichs (PL13), die Identität eines Unterbereichs (P11-P13), die zu dem absendenden Prozessor (P11) gehört; und eine Verschiebung in dem Unterbereich, die einen Speicherplatz bezeichnet; wobei Pakete, die für aufeinander folgende Speicherplätze bestimmt sind, in aufeinander folgender Weise ausgesendet werden;
- Mittel (2), die eine Folge von Paketen (PK1, ..., PK16) speichern;
- und Mittel (3) zum Aussenden dieser Pakete auf den externen Bus (BE) in Form einer Folge von Blöcken (BK1, BK2, ...), wovon jeder eine ganze Zahl von Paketen enthält.

## Claims

1. Device for communication between several processors (P11, P21, P31, P12, P22, P32, P13, P23, P33) which may be situated on different boards (C1, C2, C3), each processor being connected by a local bus (BL1, BL2, BL3) to a memory (M1, M2, M3 respectively) situated on the same board as this processor; each processor comprising software means for sending on its local bus a sequence called the write-access request, consisting of command words for writing data to a memory location designated by an address contained in one of the words of the sequence; and data transmission means (RC1, RC2, RC3, BE) for interconnecting all the local buses, these transmission means comprising, on each board (C1, C2, C3), a routing device (RC1, RC2, RC3) connected to the local bus (BL1, BL2, BL3) of this board and connected to a so-called external bus (BE) connecting all the boards; and each routing device (RC1) comprising:
- first means (1, 2, 3) for analysing each write-access request sent on the local bus (BL1, BL2, BL3) to which this routing device is connected, and, if an access request is addressed to a memory (M2, M3) which is not situated on the same board (C1) as that supporting this routing device, sending on the external bus (BE) a string (M) of packets (PK1, ..., PK16) constructed from the data and from the address contained in this access request, and sending on the local bus (BL1) an acknowledgement of receipt intended for the processor which sent this access request;
- second means (4, 5, 6) for analysing each packet string sent on the external bus (BE) by another routing circuit (RC2, RC3) and, if a packet string contains a write-access request addressed to a memory situated on the board (C1) supporting this routing device (RC1), sending on the local bus (BL1) a write-access request constructed from data and from an address contained in this packet string;
**characterized in that** each board comprises a memory controller (MC1, MC2, MC3 respectively) for reading data packets from and writing them to the memory (M1, M2, M3 respectively) of this board;
and **in that** when a memory controller (MC3) receives a packet to be written to the memory which is associated therewith, it writes this packet to a region (..., PL13, ...), of this memory, specific to the processor (..., P13, ...) which is the destination of the relevant packet, and more particularly to a sub-region (..., P11-P13, ...) specific to the processor (..., P11, ...) which sent the packet.

2. Device according to Claim 1, **characterized in that** each routing device (RC1) furthermore comprises:
- third means (1, 2, 3) for analysing each read-access request sent on the local bus (BL1) to which this routing device is connected and, if a read-access request is addressed to a memory (M2, M3) which is not situated on the same board (C1) as that supporting this routing device, sending on the external bus (BE) a string (M) of packets (PK1, ..., PK16) constructed from this read-access request;
- fourth means (4, 5, 6) for analysing each packet string sent on the external bus (BE) by another routing circuit (RC2, RC3) and, if a packet string contains a read-access request addressed to a memory situated on the board (C1) supporting this routing device, sending on the local bus (BL1) a read-access request constructed from the read-access request contained in this packet string;
- fifth means (1, 2, 3) for analysing each sequence sent on the local bus (BL1) and containing data read at the request of a processor situated on another board (C1, C2, C3), and sending on the external bus (BE) a string (M) of packets (PK1, ..., PK16) constructed from these data read;
- sixth means (4, 5, 6) for analysing each packet string sent on the external bus (BE) by [lacuna], and, if a packet string contains read data addressed to a processor situated on the board (C1) supporting this routing device, sending on the local bus (BL1) a sequence constructed from this string of packets.

3. Device according to claim 1, **characterized in that** the first means (1, 2, 3) comprise
- means (1) for:
-- analysing sequences which are sent on the local bus (BL1), identifying the write-access requests intended for a processor situated on another board, for constructing packets (PK1, ..., PK16), of fixed length, from these sequences; and sending on the local bus (BL1) an acknowledgement of receipt intended for the processor which sent this access request;
-- furnishing each packet with a header (H) comprising: a write-access indicator, the address of the start of a memory region (PL13) specific to the destination processor (P13), the identity of a sub-region (P11-P13) specific to the dispatcher processor (P11); and a shift inside the sub-region designating a memory location; packets intended for consecutive memory locations being sent consecutively;
- means (2) for storing a string of packets (PK1, ..., PK16);
- and means (3) for sending these packets on the external bus (BE) in the form of a string of blocks (BK1, BK2, ...) each comprising a whole number of packets.
